# EUROPEAN PATENT SPECIFICATION

(11) **EP 1 714 336 B1**
(45) Date of publication and mention of the grant of the patent: **21.03.2018**
(21) Application number: 05700264.4
(22) Date of filing: 12.01.2005
(51) Int. Cl.: H01M 4/04, B29C 47/88, B29C 55/18, B29C 47/00, B29C 43/22

(54) **METHOD FOR MAKING POSITIVE ELECTRODE FILMS FOR POLYMER BATTERIES**
VERFAHREN ZUR HERSTELLUNG VON POSITIV-ELEKTRODENFILMEN FÜR POLYMERBATTERIEN
PROCEDE PERMETTANT DE FABRIQUER DES FILMS D'ELECTRODE POSITIVE POUR DES BATTERIES POLYMERES

(30) Priority: 13.01.2004 US 535828 P
(43) Date of publication of application: 25.10.2006
(73) Proprietor: Bathium Canada Inc., Boucherville, QC J4B 7Z7 (CA)
(72) Inventor: BROSCH, Bernd, St-Bruno de Montarville, Quebec J3V 6E3 (CA); GAGNON, Regis, St-jean-sur-Richelieu, Quebec J3A 2A8 (CA)
(74) Representative: Santarelli
(86) International application number: PCT/CA2005/000029
(87) International publication number: WO 2005/069411

(56) References cited:
- WO-A1-2004/026498
- WO-A2-02/071513
- WO-A2-03/075375
- WO-A2-03/075375
- JP-A- 7 054 016
- US-A- 3 002 770
- US-A- 4 502 903
- US-A- 4 844 766
- US-A- 5 528 920
- US-A- 6 019 801
- US-B2- 6 635 384

## Description

### CROSS-REFERENCE TO RELATED APPLICATION

The present application claims priority from U.S. provisional application no. 60/535,828 filed on January 13, 2004.

### FIELD OF THE INVENTION

The present invention relates generally to polymer batteries and, more specifically, to a method for making positive electrode films for polymer batteries.

### BACKGROUND

Rechargeable batteries manufactured from laminates of polymer electrolytes and sheet-like electrodes display many advantages over conventional liquid electrolyte batteries. These advantages include lower overall battery weight, high power density, high specific energy, and longer service life. In addition, they are more environmentally friendly since the danger of spilling toxic liquid into the environment is eliminated.

Polymer battery components generally include positive electrodes (also referred to as cathodes), negative electrodes (also referred to as anodes), and an insulating material capable of permitting ionic conductivity, such as an electrolyte separator, sandwiched therebetween. The negative electrodes are usually made of light-weight metal foils, such as alkali metals and alloys thereof typically lithium metal, lithium oxide, lithium-aluminum alloys and the like or insertion materials such as carbon or graphite. The composite cathodes or positive electrodes are usually formed of a mixture of active material such as a transitional metal oxide, an electronically conductive filler, usually carbon particles, an ionically conductive polymer electrolyte material, and a current collector, usually a thin sheet of aluminum.

Composite cathode films are usually obtained by coating onto a current collector a mixture of a solvent and cathode materials with a doctor blade, for instance, and evaporating the solvent. This process is inefficient for the mass production of cathode films since it requires recycling the solvent evaporated and the resulting cathode films have a relatively high porosity, and therefore decreased density.

One of the most efficient manufacturing processes for obtaining thin films is the process of continuous extrusion. However, the extrusion of positive electrode material into thin films is rendered extremely difficult by the high percentage of solids (active material and conductive filler) necessary to produce high energy density cathode films. The difficulty increases dramatically when attempting to directly extrude cathode films of less than 50µm. The pressure required to extrude cathode material with over 40% solid content through a sheet die opening of less than 50µm is such that the die itself may not resist and a gear pump capable of generating the required pressure may not be available on the market and therefore must be custom built.

In automotive applications such as hybrid vehicle applications, it is highly desirable to assemble very thin films of less than 50µm and preferably less than 30µm. Unfortunately, it is extremely difficult to process through an extruder cathode materials having a high solid content of active cathodic material and conductive filler (above 30%) to form a thin positive electrode composite film of less than 50µm and preferably less than 30µm.

Thus, there is a need for a method for manufacturing thin positive electrode films of less than 50µm and preferably less than 30µm having a high solid content.

### SUMMARY OF THE INVENTION

It is already known from WO - 03/075375 A2 a method of making a positive electrode film which has a thickness of 25-125 microns, preferably 35-70 microns, comprising compounding in an extruder a composite positive electrode mixture of active cathode material, an electronically conductive additive, and an ionically conductive polymer electrolyte; extruding the composite positive electrode mixture through a sheet die into a film having a thickness of 40-200 microns, and reducing the thickness of the extruded film through a series of at least two pairs of nip rollers to obtain a composite positive electrode film having a thickness of 25-125 microns, and preferably 35-70 microns, the extruded film being separated from the nip rollers by a propylene film.

It is further known from JP - 07 054016 A and WO - 02/071513 A2 a two-step rolling (hot-cold rolling); it is mentioned in WO - 02/071513 to enhance the effects of the rolling steps by use of lubricating oils. On the other hand US - 6 019 801 mentions a lubricant having the formula of heptane used on surfaces of nip rollers. As to US - 4 502 903, it teaches the use of an interconnected belt between nip rollers.

It is also known from US - 3 002 770 a calendaring process wherein a film thickness is decreased while its width is increased by maintaining rollers in series at the same speed; the rolls are heated at a temperature well below the sintering temperature of the material. US - 4 844 766 discloses an apparatus for the continuous fabrication of thermoplastic films wherein the extruded thermoplastic material is introduced directly into a double-band press having pressure plates maintained at a temperature that solidifies the extruded film.

The invention provides a method as claimed in claim 1.

In a particular example of implementation, the thickness of the extruded film is reduced to less than 30 microns.

The method may further use a belt connecting the nip rollers of each side of the at least two pairs of nip rollers or in another embodiment a polypropylene film to separate the extruded film from the nip rollers.

The rotational speed of the second pair of nip rollers may be set to exceed the rotational speed of the first pair of nip rollers in order to control the width of the extruded film being processed,

In one embodiment, the positive electrode film comprises more than 40%/wt of active cathode material and electronically conductive additive. The positive electrode film may be laminated onto a current collector when it has reached a desired thickness of less than 50µm.

The active cathode material may be selected from cobalt oxide, nickel oxide, nickel cobalt oxide, nickel cobalt aluminum oxide, manganese oxide (LiMn₂O₄) or their analogs for so-called 4 V cathodes or among cathodes of less than 4 V such as phosphates or other polyanions of transition metals such as LiFePO₄, Nasicon structures also including V₂O₅, LiV₃O₈ and MnO₂. Various other choices are possible as the nature of the active material is not a limitation of the present invention.

The apparatus may comprise a plurality of nip rollers wherein the nip distance between pairs of rollers is progressively smaller. A metallic belt surrounding the rollers of each side of the nips may be used as contact surfaces. In one specific embodiment, a polypropylene film is used to separate the positive electrode film from the contact surfaces.

These and other aspects and features of the present invention will now become apparent to those of ordinary skill in the art upon review of the following description of specific embodiments of the invention in conjunction with the accompanying drawings.

### BRIEF DESCRIPTION OF THE DRAWINGS

A detailed description of embodiments of the present invention is provided herein below with reference to the following drawings, in which:
Figure 1 is a schematic perspective view of a simplified calendering apparatus combined with an extrusion machine, according to a first embodiment of the invention;
Figure 2 is a schematic perspective view of a simplified calendering apparatus combined with an extrusion machine, according to a second embodiment of the invention;
Figure 3 is a schematic side elevational view of a calendering apparatus combined with an extrusion machine, according to a third embodiment of the invention;
Figure 4 is a schematic top plan view of the calendering apparatus/extrusion machine combination shown in Figure 3;
Figure 5 is a schematic side elevational view of a calendering apparatus combined with an extrusion machine, according to a fourth embodiment of the invention;
Figure 6 is a schematic top plan view of the calendering apparatus/extrusion machine combination shown in Figure 5;
Figure 7 is a schematic perspective view of a calendering apparatus combined with an extrusion machine, according to a fifth embodiment of the invention; and
Figure 8 is a schematic side elevational view of a calendering apparatus combined with an extrusion machine, according to a sixth embodiment of the invention.

In the drawings, embodiments of the invention are illustrated by way of examples. It is to be expressly understood that the description and the drawings are only for the purpose of illustration and as an aid to understanding. They are not intended to be a definition of the limits of the invention.

### DETAILED DESCRIPTION

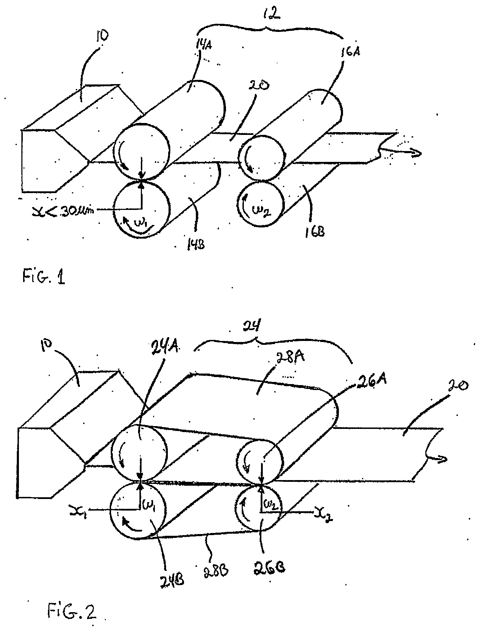

With reference to Figure 1, there is shown a sheet die 10 of a typical single or twin screw extruder (not shown) and a calendering apparatus 12. Calendering apparatus 12 comprises a first pair of nip rollers 14A and 14B and a second pair of nip rollers 16A and 16B. The various component materials of a composite positive electrode are mixed and compounded in the screw section of the extruder and exit under pressure though the sheet die 10 in the form of a sheet or film 20 of a thickness of about 75µm to 125µm. The composite positive electrode sheet 20 exits the sheet die 10 at a temperature according to the melting point of the polymer binder used and is taken up by the first pair of cylindrical nip rollers 14A and 14B. The distance 'x' between rollers 14A and 14B is set at a desired thickness (for instance, x < 30µm). When composite positive electrode sheet 20 is passed through the nip rollers 14A and 14B, its thickness is reduced directly to the desired thickness 'x'.

In a particular embodiment, in order for the composite positive electrode sheet 20 to maintain some malleability which enables it to be calendered with minimum stress, at least one of the nip rollers 14A and 14B is heated to a temperature near the temperature of the composite positive electrode sheet 20 when it exits the sheet die 10. Advantageously, both nip rollers 14A and 14B are heated to a temperature near the temperature of the composite positive electrode sheet 20 when it exits the sheet die 10. Maintaining the composite positive electrode sheet 20 at a temperature near the temperature when it exits the sheet die 10 maintains the electrochemical integrity of the composite positive electrode sheet 20 by preventing microscopic separation of the polymer electrolyte constituent from the active cathode material. If the composite positive electrode sheet 20 is allowed to cool substantially, its polymer constituent may harden enough that it loses its malleability and pliability such that when it is deformed through the nip rollers 14A and 14B, its bond with the solid active cathode material may be severed, thereby partially breaking the electrochemical link between the polymer and the active cathode material.

The second pair of cylindrical nip rollers 16A and 16B picks up the composite positive electrode sheet 20 of reduced thickness and moves it to a further processing station. At least one of the nip rollers 16A and 16B (and advantageously both rollers 16A and 16B) is maintained at a cool temperature such that, when the composite positive electrode sheet 20 passes through, it is cooled down to a temperature that allows it to maintain its physical integrity. In this example, the distance between rollers 16A and 16B is set at the same distance as the distance 'x' between the rollers 14A and 14B (x < 30pm) such that no reduction of thickness occurs at the second pair of nip rollers 16A and 16B. A lubricant is used on the surfaces of nip rollers 14A, 14B and 16A, 16B which directly contact the positive electrode film 20 in order to inhibit adhesion of the positive electrode film 20 to the surfaces of the nip rollers. The lubricant is dispensed by any method known to those skilled in the art. The lubricant has the chemical formula of C₇H₁₆.

In a variant of the process, the composite positive electrode sheet 20 exiting nip rollers 16A and 16B may be maintained in contact with the surface of one of the cylindrical rollers 16A or 16B in order to increase the cooling time.

In the specific embodiment of Figure 1, the rotational speed of nip roller 14A is equal to the rotational speed of nip roller 14B, and the rotational speed of nip roller 16A is equal to the rotational speed of nip roller 16B. However, the relation between the rotational speed ω1 of the first pair of cylindrical nip rollers 14A and 14B and the rotational speed ω2 of the second pair of nip rollers 16A and 16B may vary. In this particular example where the second pair of nip rollers 16A and 16B apply no pressure onto the composite positive electrode sheet 20, if ω1 is equal to ω2, the width of the composite positive electrode sheet 20 will increase proportionally to its thickness reduction such that the composite positive electrode sheet 20 will be wider after it has passed through nip rollers 14A and 14B and remain the same width before and after it passes through nip rollers 16A and 16B. It is however possible to reduce the width of the composite positive electrode sheet 20 after it passes through nip rollers 14A and 14B by increasing the rotational speed ω2 relative to the rotational speed ω1 such that nip rollers 16A and 16B pull and stretch the composite positive electrode sheet 20 thereby reducing its width. In this case the relation between the rotational speeds ω2/ω1 is greater than one (ω2/ω1 > 1). This relation ω2/ω1 may be calculated relative to the thickness reduction occurring at the nip rollers 14A and 14B such that the width of composite positive electrode sheet 20 exiting nip rollers 16A and 16B will be the same as the width of composite positive electrode sheet 20 exiting sheet die 10.

In Figure 2, there is shown a second embodiment of the invention in which a calendering apparatus 22 is juxtaposed to a sheet die 10 of a typical single or twin screw extruding machine (not shown). Calendering apparatus 22 comprises a first pair of cylindrical nip rollers 24A and 24B and a second pair of cylindrical nip rollers 26A and 26B. In this specific embodiment, nip rollers 24A and 26A are joined by a metallic belt 28A that remains in contact with the composite positive electrode sheet 20 as it is being calendered. Similarly, nip rollers 24B and 26B are joined by a metallic belt 28B that remains in contact with the composite positive electrode sheet 20 as it is being calendered. The metallic belts 28A and 28B impose that the rotational speeds of nip rollers 24A and 26A and of nip rollers 24B and 26B are equal such that ω1 = ω2.

In one example of implementation, the distance x₁ between nip rollers 24A and 24B is set at the final desired thickness of composite positive electrode sheet 20 of less than 30µm (x₁ < 30µm) and the distance x₂ between nip rollers 26A and 26B is set at the same distance (x₁ = x₂) such that all the thickness reduction work is performed at the first pair of nip rollers 24A and 24B. As previously described for the example of implementation shown in Figure 1, at least one but advantageously both of the nip rollers 24A and 24B are heated to a temperature that maintains the composite positive electrode sheet 20 soft and malleable to prevent separation of the polymer electrolyte constituent from the active cathode material and maintain electrochemical integrity. By conduction, the metallic belts 28A and 28B are also heated to the temperature of the nip rollers 24A and 24B. At least one but advantageously both of the nip rollers 26A and 26B are cooled to a temperature that at least partially solidifies the composite positive electrode sheet 20 before releasing it.

In another example of implementation, the distance x₁ between nip rollers 24A and 24B is set at an intermediate distance (for example, x₁ = 40µm) and the distance x₂ between nip rollers 26A and 26B is set at the final desired thickness for the composite positive electrode sheet 20 (for example, x₂ = 20µm). In such an example of implementation, the thickness reduction work is performed at the first pair of nip rollers 24A and 24B and at the second pair of nip rollers 26A and 26B. The nip rollers 24A and 24B and the nip rollers 26A and 26B are heated to a temperature that maintains the composite positive electrode sheet 20 soft and malleable. The metallic belts 28A and 28B are also heated by conduction throughout the thickness reduction process. The composite positive electrode sheet 20 of reduced thickness is cooled by any means known to those skilled in the art, such as through a series of cooling rollers.

It will be appreciated that, in the embodiment illustrated in Figure 2, because ω1 = ω2, the width of composite positive electrode sheet 20 will increase at each pass through the nip rollers where its thickness is reduced.

In a particular example of implementation, a lubricant is used on the surfaces of the metallic belts 28A and 28B which directly contact the composite positive electrode film 20 in order to prevent adhesion of the composite positive electrode film 20 to the surfaces of the metallic belts 28A and 28B. The lubricant is dispensed by any method known to those skilled in the art. In a specific embodiment, the lubricant has the chemical formula of C₇H₁₆.

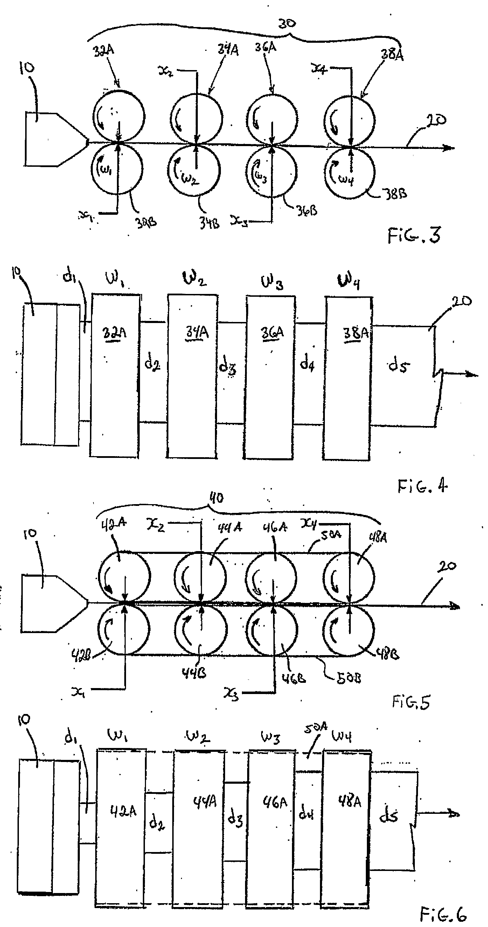

In Figures 3 and 4, there is shown respectively a side elevational view and a top plan view of a third embodiment of the invention in which a calendering apparatus 30 is juxtaposed to a sheet die 10 of a typical single or twin screw extruding machine (not shown). Calendering apparatus 30 comprises a series of cylindrical nip rollers 32A, 32B, 34A, 34B, 36A, 36B, 38A and 38B arranged in pairs and adapted to progressively reduce the thickness of a composite positive electrode sheet 20 passing through the calendering apparatus 30. In this embodiment, the distances x₁, x₂ and x₃ between the nip rollers 32A and 32B, 34A and 34B, and 36A and 36B, respectively, gradually decrease such that x₁ > x₂ > x₃ and the thickness reduction work performed on the composite positive electrode sheet 20 is also more gradual than in the previous embodiments shown in Figures 1 and 2. As an example only, the composite positive electrode sheet 20 may exit die 10 at a thickness of 75µm, the distances x₁, x₂ and x₃ between the nip rollers 32A and 32B, 34A and 34B, and 36A and 36B, respectively, may be set at 55µm, 35µm, and 25µm, respectively. To facilitate the performance of the thickness reduction work, at least one but preferably both rollers of each pair of nip rollers 32A-32B, 34A-34B, and 36A-36B are heated to a temperature that maintains the composite positive electrode sheet 20 soft and malleable to prevent separation of the polymer electrolyte constituent from the active cathode material and maintain electrochemical integrity. In this example, the distance x₄ between nip rollers 38A and 38B remains at 25µm and at least one but preferably both of nip rollers 38A and 38B are cooled to a temperature that at least partially solidifies the composite positive electrode sheet 20 before it is released.

Figure 4 illustrates the process of thickness reduction through the series of pairs of nip rollers 32A-32B, 34A-34B, 36A-36B, and 38A-38B, wherein the rotational speed of the nip rollers is progressively faster such that ω1 < ω2 < ω3. The increase in rotational speed between successive pairs of nip rollers 32A-32B, 34A-34B, and 36A-36B, respectively, stretches the composite positive electrode sheet 20, thereby offsetting the increase in width of the sheet 20 that typically occurs if the rotational speeds of nip rollers 32A and 32B, 34A and 34B, and 36A and 36B remain the same (ω1 = ω2 = ω3). As illustrated schematically, the widths d₁, d₂, d₃, d₄ and d₅ of composite positive electrode sheet 20 remain substantially equal because the rotational speeds of nip rollers 32A and 32B, 34A and 34B, and 36A and 36B are such that ω1 < ω2 < ω3. In this specific example, ω3 = ω4 since x₃ = x₄ and no reduction of thickness occurs at the pair of nip rollers 38A and 38B. It is to be understood that various variations are possible without departing from the scope of the invention. For instance, the widths d₁, d₂, d₃ and d₄ may keep increasing (d₁ < d₂ < d₃ < d₄) yet the rotational speeds may still be such that ω1 < ω2 < ω3 or the rotational speeds may be equal (ω1 = ω2 = ω3).

In a particular example of implementation, a lubricant is used on the surfaces of nip rollers 32A and 32B, 34A and 34B, 36A and 36B, and 38A and 38B, which directly contact the composite positive electrode film 20 in order to prevent adhesion of the composite positive electrode film 20 to the surfaces of the nip rollers. The lubricant is dispensed by any method known to those skilled in the art. In a specific embodiment, the lubricant has the chemical formula of C₇H₁₆.

In Figures 5 and 6, there is shown respectively a side elevational view and a top plan view of a fourth embodiment of the invention in which a calendering apparatus 40 is juxtaposed to a sheet die 10 of a typical single or twin screw extruding machine (not shown). Calendering apparatus 40 comprises a series of pairs of cylindrical nip rollers 42A-42B, 44A-44B, 46A-46B, and 48A-48B, as well as two metallic belts 50A and 50B respectively circumscribing and joining together the two banks of nip rollers 42A-44A-46A-48A and 42B-44B-46B-48B. Calendering apparatus 40 is adapted to progressively reduce the thickness of a composite positive electrode sheet 20 passing through the calendering apparatus 40. In this embodiment, the distances x₁, x2 and x3 between the nip rollers 42A and 42B, 44A and 44B, and 46A and 46B, respectively, gradually decrease such that x₁ > x₂ > x₃ and the thickness reduction work performed on the composite positive electrode sheet 20 is also more gradual than in the previous embodiments shown in Figures 1 and 2. For the sake of simplification, the same exemplary distances x₁, x₂, x₃ and x₄ will be used here as for Figures 3 and 4. Composite positive electrode sheet 20 exits die 10 at a thickness of about 75µm, the distances x₁, x₂ and x₃ between the nip rollers 42A and 42B, 44A and 44B, and 46A and 46B, respectively, are set at 55pm, 35µm, and 25µm, respectively. Similarly, in order to facilitate the performance of the thickness reduction work, at least one but preferably both rollers of each pair of nip rollers 42A-42B, 44A-44B and 46A-46B are heated to a temperature sufficient to transfer to the metallic belts 50A and 50B enough heat to maintain the composite positive electrode sheet 20 soft and malleable as it passes through the pairs of nip rollers 42A-42B, 44A-44B and 46A-46B. In this example, the distance x₄ between the nip rollers 48A and 48B remains at 25µm and at least one but preferably both of nip rollers 48A and 48B are cooled to a temperature sufficient to draw enough heat from metallic belts 50A and 50B to at least partially cool and solidify the composite positive electrode sheet 20 before it is released.

The metallic belts 50A and 50B circumscribing the two banks of nip rollers impose that the rotational speeds of nip rollers 42A and 42B, 44A and 44B, 46A and 46B, and 48A and 48B are equal (ω1 = ω2 = ω3 = ω4). As such, the width of the composite positive electrode sheet 20 will increase with each step of reduction of thickness through the pairs of nip rollers 42A-42B, 44A-44B and 46A-46B such that d₁ < d₂ < d₃ < d₄. However, since no work is performed at the pair of nip rollers 48A-48B other than cooling of composite positive electrode sheet 20, the width d₅ should be substantially equal to the width d₄.

In a particular example of implementation, a lubricant is used on the surfaces of metallic belts 50A and 50B which directly contact the composite positive electrode film 20 in order to prevent adhesion of the composite positive electrode film 20 to the surfaces of the metallic belts 50A and 50B. The lubricant is dispensed by any method known to those skilled in the art. In a specific embodiment, the lubricant has the chemical formula of C₇H₁₆.

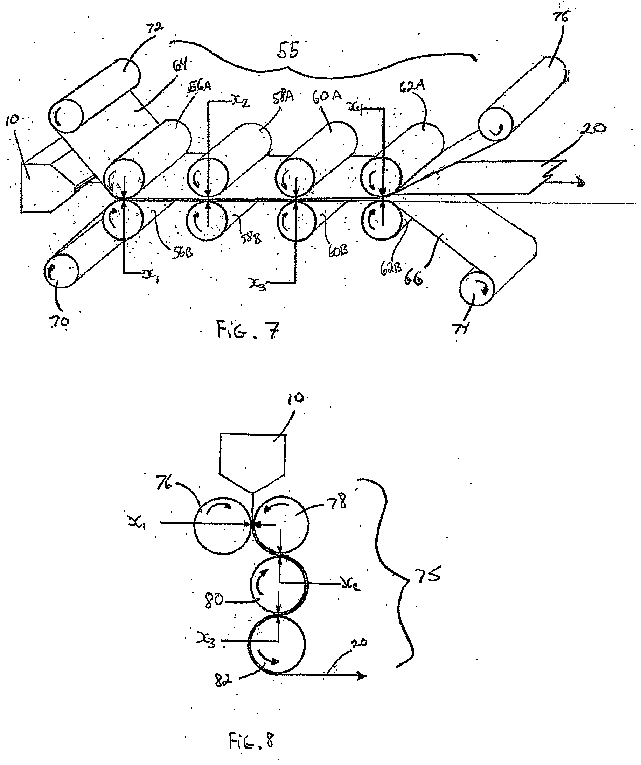

In Figure 7, there is shown a fifth embodiment of the invention in which a calendering apparatus 55 is juxtaposed to a sheet die 10 of a typical single or twin screw extruder (not shown). Calendering apparatus 55 comprises a series of cylindrical nip rollers arranged in pairs 56A-56B, 58A-58B, 60A-60B, and 62A-62B, and adapted to progressively reduce the thickness of a composite positive electrode sheet 20 passing through calendering apparatus 55. Calendering apparatus 55 also comprises a pair of polypropylene sheets 64 and 66 which separate the composite positive electrode sheet 20 from the surfaces of nip rollers 56A, 56B, 58A, 58B, 60A, 60B, 62A and 62B. In this embodiment, the distances x1, x2 and x3 between the nip rollers 56A and 56B, 58A and 58B, and 60A and 60B, respectively, gradually decrease such that x₁ > x₂ > x₃ and the thickness reduction work performed on the composite positive electrode sheet 20 is also more gradual than in the previous embodiments shown in Figures 1 and 2. As described in previous examples, x₃ = x₄ and the last pair of nip rollers 62A-62B is used to cool the composite positive electrode sheet 20 before releasing it. To facilitate the performance of the thickness reduction work, at least one but preferably both rollers of each pair of nip rollers 56A-56B, 58A-58B, and 60A-60B are heated to a temperature sufficient to transfer to the polypropylene sheets 64 and 66 enough heat to maintain the composite positive electrode sheet 20 soft and malleable as it passes through the pairs of nip rollers 56A-56B, 58A-58B, and 60A-60B. The polypropylene sheets 64 and 66 are dispensed from rolls 70 and 72 and are removed and collected onto rolls 74 and 76. Due to the presence of the polypropylene sheets 64 and 66, the rotational speeds of the nip rollers 56A, 56B, 58A, 58B, 60A, 60B, 62A and 62B are equal such that there will be an increase in the width of the composite positive electrode sheet 20 as it passes through the pairs of nip rollers 56A-56B, 58A-58B, and 60A-60B.

In a particular example of implementation, a lubricant is used on the surfaces of polypropylene sheets 64 and 66 which directly contact the composite positive electrode film 20 in order to prevent adhesion of the composite positive electrode film 20 to the surfaces of polypropylene sheets 64 and 66. The lubricant is dispensed by any method known to those skilled in the art. In a specific embodiment, the lubricant has the chemical formula of C₇H₁₆.

In Figure 8, there is shown a sixth embodiment of the invention in which a calendering apparatus 75 is juxtaposed to a sheet die 10 of a typical single or twin screw extruding machine (not shown). Calendering apparatus 75 comprises a series of cylindrical nip rollers 76, 78, 80 and 82 adapted to progressively reduce the thickness of a composite positive electrode sheet 20 passing through calendering apparatus 75. In this embodiment, the extruded composite positive electrode sheet 20 snakes it way in between the nip rollers 76, 78, 80 and 82. The composite positive electrode sheet 20 is taken by nip x₁ defined by the pair of rollers 76-78 which are advantageously heated to facilitate the work of compressing the positive electrode sheet 20 to reduce its thickness and to prevent separation of the polymer electrolyte constituent from the active cathode material and maintain electrochemical integrity. The positive electrode sheet 20 then moves into a second nip x₂ defined by the pair of rollers 78-80, roller 80 also being advantageously heated to facilitate the work of compressing the positive electrode sheet 20 between the pair of rollers 78-80. The positive electrode sheet 20 then follows the contour of cylindrical roller 80 and passes through a third nip x₃ defined by the pair of rollers 80-82 which further reduces its thickness, Advantageously, the last roller 82 is maintained at a cool temperature such that the composite positive electrode sheet 20 is also cooled and at least partially solidified before being released.

In a particular example of implementation, a lubricant is used on the surfaces of rollers 76, 78, 80 and 82 which directly contact the composite positive electrode film 20 in order to prevent adhesion of the composite positive electrode film 20 to the surfaces of rollers 76, 78, 80 and 82. The lubricant is dispensed by any method known to those skilled in the art. In a specific embodiment, the lubricant has the chemical formula of C₇H₁₆.

In each of the previously described embodiments, the sheet die and calendering apparatus may be oriented horizontally or vertically without departing from the scope of the invention. Furthermore, the width of the composite positive electrode film 20 when exiting the calendering apparatus may further be controlled by a slitting process to ensure an exact width of the final product without departing from the scope of the invention.

## Claims

1. A method of making a positive electrode film having a thickness of less than 50µm for a rechargeable polymer battery, said method comprising:
a) compounding in an extruder a composite positive electrode mixture of active cathode material, an electronically conductive additive, and an ionically conductive polymer electrolyte;
b) extruding the composite positive electrode mixture through a sheet die into a film having a thickness of more than 50µm ;
c) reducing the thickness and increasing the width of the extruded film through a series of at least two pairs of nip rollers to obtain a composite positive electrode film having a thickness of less than 50µm, at least one nip roller of the first pair of nip rollers being heated at or above the melting point of the extruded film polymer electrolyte constituent, at least one nip roller of the second pair of nip rollers being maintained at a temperature that at least partially solidifies the extruded film of reduced thickness such that when the extruded film of reduced thickness passes through said second pair of nip rollers, it is cooled down to a temperature that allows it to maintain its physical integrity, wherein a lubricant having the chemical formula of C₇H₁₆ is used on surfaces of the nip rollers in order to inhibit adhesion of the extruded film to the surfaces of the nip rollers.

2. A method as defined in claim 1, wherein the thickness of the composite positive electrode film is less than 40µm.

3. A method as defined in claim 1, wherein the thickness of the composite positive electrode film is less than 30µm.

4. A method as defined in claim 1, wherein the thickness of the extruded film is progressively reduced through the series of at least three pairs of nip rollers, the series of at least three pairs of nip rollers comprising a first pair of nip rollers including at least one heated nip roller, and a second pair of nip rollers including at least one heated nip roller.

5. A method as defined in claim 4, wherein both nip rollers of the first pair of nip rollers are heated and both nip rollers of the second pair of nip rollers are heated.

6. A method as defined in claim 1, wherein the series of at least two pairs of nip rollers comprises a first pair of nip rollers and a second pair of nip rollers, the first pair of nip rollers and the second pair of nip rollers being interconnected via a belt, the belt connecting one nip roller of the first pair of nip rollers to one nip roller of the second pair of nip rollers.

7. A method as defined in claim 1, wherein, at step c), the extruded film is separated from the nip rollers by a polypropylene film.

8. A method as defined in claim 1, wherein the series of at least two pairs of nip rollers comprises a first pair of nip rollers and a second pair of nip rollers, a rotational speed of the second pair of nip rollers exceeding a rotational speed of the first pair of nip rollers.

## Patentansprüche

1. Verfahren zur Herstellung eines Positiv-Elektrodenfilms mit einer Dicke von weniger als 50 µm für eine wiederaufladbare Polymerbatterie, wobei das Verfahren umfasst:
a) Vermengen einer Komposit-Positiv-Elektrodenmischung von aktivem Kathodenmaterial, einem elektronisch leitfähigen Additiv und einem ionisch leitfähigen Polymerelektrolyten in einem Extruder;
b) Extrudieren der Komposit-Positiv-Elektrodenmischung durch eine Breitschlitzdüse in einen Film mit einer Dicke von mehr als 50 µm;
c) Reduzieren der Dicke und Erhöhen der Breite des extrudierten Films durch eine Serie von mindestens zwei Paaren von Quetschwalzen, um einen Komposit-Positiv-Elektrodenfilm mit einer Dicke von weniger als 50 µm zu erhalten, wobei mindestens eine Quetschwalze des ersten Paars der Quetschwalzen bei oder oberhalb des Schmelzpunktes des extrudierten Film-Polymer-Elektrolyt-Bestandteils erwärmt wird, mindestens eine Quetschwalze des zweiten Paars der Quetschwalzen bei einer Temperatur gehalten wird, die den extrudierten Film mit reduzierter Dicke zumindest teilweise verfestigt, so dass, wenn der extrudierte Film mit reduzierter Dicke durch das zweite Paar der Quetschwalzen hindurch gelangt, er auf eine Temperatur abgekühlt wird, die die Erhaltung dessen physikalischer Integrität zulässt, worin ein Gleitmittel mit der chemischen Formel C₇H₁₆ auf den Oberflächen der Quetschwalzen verwendet wird, um die Haftung des extrudierten Films an die Oberflächen der Quetschwalzen zu verhindern.

2. Verfahren wie in Anspruch 1 definiert, wobei die Dicke des Komposit-Positiv-Elektrodenfilms weniger als 40 µm ist.

3. Verfahren wie in Anspruch 1 definiert, wobei die Dicke des Komposit-Positiv-Elektrodenfilms weniger als 30 µm ist.

4. Verfahren wie in Anspruch 1 definiert, wobei die Dicke des extrudierten Films zunehmend reduziert wird durch die Serie von mindestens drei Paaren von Quetschwalzen, wobei die Serie von mindestens drei Paaren von Quetschwalzen ein erstes Paar von Quetschwalzen, einschließlich mindestens einer erwärmten Quetschwalze, und ein zweites Paar von Quetschwalzen, einschließlich mindestens einer erwärmten Quetschwalze, umfasst.

5. Verfahren wie in Anspruch 4 definiert, wobei beide Quetschwalzen des ersten Paars von Quetschwalzen erwärmt und beide Quetschwalzen des zweiten Paars von Quetschwalzen erwärmt werden.

6. Verfahren wie in Anspruch 1 definiert, wobei die Serie von mindestens zwei Paaren von Quetschwalzen ein erstes Paar von Quetschwalzen und ein zweites Paar von Quetschwalzen umfasst, wobei das erste Paar von Quetschwalzen und das zweite Paar von Quetschwalzen miteinander über ein Band verbunden sind, wobei das Band eine Quetschwalze des ersten Paars von Quetschwalzen mit der ersten Quetschwalze des zweiten Paars von Quetschwalzen verbindet.

7. Verfahren wie in Anspruch 1 definiert, wobei bei Schritt c) der extrudierte Film von den Quetschwalzen durch einen Polypropylenfilm getrennt wird.

8. Verfahren wie in Anspruch 1 definiert, wobei die Serie von mindestens zwei Paaren von Quetschwalzen ein erstes Paar von Quetschwalzen und ein zweites Paar von Quetschwalzen umfasst, wobei die Rotationsgeschwindigkeit des zweiten Paars von Quetschwalzen eine Rotationsgeschwindigkeit des ersten Paars von Quetschwalzen übersteigt.

## Revendications

1. Procédé de fabrication d'un film d'électrode positive ayant une épaisseur inférieure à 50 µm pour une batterie polymère rechargeable, ledit procédé comprenant :
(a) le compoundage, dans un extrudeur, d'un mélange d'électrode positive composite de matériau de cathode actif, d'un additif électroniquement conducteur, et d'un électrolyte polymère ioniquement conducteur ;
(b) l'extrusion du mélange d'électrode positive composite à travers une filière plate d'extrusion en un film ayant une épaisseur supérieure à 50 µm ;
(c) la réduction de l'épaisseur et l'augmentation de la largeur du film extrudé à travers une série d'au moins deux paires de rouleaux de pincement pour obtenir un film d'électrode positive composite ayant une épaisseur inférieure à 50 µm, au moins un rouleau de pincement de la première paire de rouleaux de pincement étant chauffé au ou au-dessus du point de fusion du constituant d'électrolyte polymère de film extrudé, au moins un rouleau de pincement de la deuxième paire de rouleaux de pincement étant maintenu à une température qui solidifie au moins partiellement le film extrudé d'épaisseur réduite de sorte que, lorsque le film extrudé d'épaisseur réduite passe à travers ladite deuxième paire de rouleaux de pincement, il est refroidi à une température qui lui permet de conserver son intégrité physique, un lubrifiant ayant la formule chimique C₇H₁₆ étant utilisé sur les surfaces des rouleaux de pincement afin d'empêcher l'adhérence du film extrudé aux surfaces des rouleaux de pincement.

2. Procédé selon la revendication 1, dans lequel l'épaisseur du film d'électrode positive composite est inférieure à 40 µm.

3. Procédé selon la revendication 1, dans lequel l'épaisseur du film d'électrode positive composite est inférieure à 30 µm.

4. Procédé selon la revendication 1, dans lequel l'épaisseur du film extrudé est réduite progressivement à travers la série d'au moins trois paires de rouleaux de pincement, la série d'au moins trois paires de rouleaux de pincement comprenant une première paire de rouleaux de pincement comprenant au moins un rouleau de pincement chauffé, et une deuxième paire de rouleaux de pincement comprenant au moins un rouleau de pincement chauffé.

5. Procédé selon la revendication 4, dans lequel les deux rouleaux de pincement de la première paire de rouleaux de pincement sont chauffés et les deux rouleaux de pincement de la deuxième paire de rouleaux de pincement sont chauffés.

6. Procédé selon la revendication 1, dans lequel la série d'au moins deux paires de rouleaux de pincement comprend une première paire de rouleaux de pincement et une deuxième paire de rouleaux de pincement, la première paire de rouleaux de pincement et la deuxième paire de rouleaux de pincement étant reliées l'une à l'autre par l'intermédiaire d'une courroie, la courroie reliant un rouleau de pincement de la première paire de rouleaux de pincement à un rouleau de pincement de la deuxième paire de rouleaux de pincement.

7. Procédé selon la revendication 1, dans lequel, à l'étape c), le film extrudé est séparé des rouleaux de pincement par un film de polypropylène.

8. Procédé selon la revendication 1, dans lequel la série d'au moins deux paires de rouleaux de pincement comprend une première paire de rouleaux de pincement et une deuxième paire de rouleaux de pincement, une vitesse de rotation de la deuxième paire de rouleaux de pincement dépassant une vitesse de rotation de la première paire de rouleaux de pincement.
